# EUROPEAN PATENT APPLICATION

(11) **EP 4 322 009 A1**
(43) Date of publication of application: **14.02.2024**
(21) Application number: 22806230.3
(22) Date of filing: 10.02.2022
(51) Int. Cl.: G06F 11/36

(54) **TEST CASE GENERATION METHOD, APPARATUS AND DEVICE**

(30) Priority: 11.05.2021 CN 202110512340
(71) Applicant: Huawei Cloud Computing Technologies Co., Ltd., Guizhou 550025 (CN); Bei Hang University, Haidian District, Beijing 100191 (CN)
(72) Inventor: WAN, Ruiyuan, Guizhou 550025 (CN); ZHOU, Le, Guizhou 550025 (CN); LI, Maogui, Guizhou 550025 (CN); XU, Liping, Guizhou 550025 (CN); WANG, Shunbin, Guizhou 550025 (CN); WU, Ji, Beijing 100191 (CN); LIU, Kaiqi, Beijing 100191 (CN)
(74) Representative: Körber, Martin Hans
(86) International application number: PCT/CN2022/075946
(87) International publication number: WO 2022/237253

(57) **Abstract**

A test case generation method and apparatus and a device are provided. In this application, after obtaining a test specification document, the test case generation apparatus recommends a test interface set to a user based on a test step described in a test scheme. The test interface set includes one or more test interfaces corresponding to each test step. The test case generation apparatus may generate one or more test cases based on a selection operation performed by the user on the test interfaces in the test interface set. A conversion process from a test step to an interface can be automatically implemented, and the user only needs to select a test interface that meets a requirement of the user, so that participation of the user in the conversion process is reduced. After the user selects the test interface, a test case can be automatically generated. This can effectively improve generation efficiency of the test case and improve automation efficiency of test case generation.

## Description

### CROSS-REFERENCE TO RELATED APPLICATIONS

This application claims priority to Chinese Patent Application No. 202110512340.2, filed with the China National Intellectual Property Administration on May 11, 2021 and entitled "TEST CASE GENERATION METHOD AND APPARATUS AND DEVICE", which is incorporated herein by reference in its entirety.

### TECHNICAL FIELD

This application relates to the field of communication technologies, and in particular, to a test case generation method and apparatus and a device.

### BACKGROUND

To implement system-level, application-level, API-level, and scenario-level tests, a test case needs to be generated. An executable test case is usually an executable test script. By running the test script, tests of test objects of different granularities can be implemented. Currently, there are a plurality of manners of generating a test case, such as a model-based testing (model-based testing) technology, a pattern testing technology (for example, a fuzzing technology), and a random monkey technology. However, currently, when the test case is generated, some functions mentioned in a test requirement need to be converted into interfaces such as mature and reusable test methods or classes. These interfaces are used for constructing the test case. A conversion process completely depends on a manual implementation of a test engineer. This has a specific requirement on a capability of the test engineer and also increases time consumed for generating the test case.

### SUMMARY

This application provides a test case generation method and apparatus and a device, to automatically generate a test case.

According to a first aspect, an embodiment of this application provides a test case generation method, where the method may be performed by a test case generation apparatus. In the method, the test case generation apparatus may first obtain a test specification document of a user. The test specification document includes a test scheme described based on a natural language. The test specification document is a document written using a natural language that complies with a syntax rule. The test specification document records information such as a test step, a test environment, and test data. After obtaining the test specification document, the test case generation apparatus may recommend a test interface set to the user based on a test step described in the test scheme. The test interface set includes one or more test interfaces corresponding to each test step. The one or more test interfaces corresponding to the test step can implement the test step. In other words, the test interface set includes a plurality of test interfaces for implementing a same test step. The user may view the recommended test interface set, and select a test interface for each test step. The test case generation apparatus may generate one or more test cases based on a selection operation performed by the user on the test interfaces in the test interface set.

According to the foregoing method, a conversion process from the test step to the test interface can be automatically implemented without manual participation, and the user only needs to select a test interface that meets a requirement of the user, so that participation of the user in the conversion process is reduced. After the user selects the test interface, the test case generation apparatus may generate the test case. This can effectively improve generation efficiency of the test case and implement automatic generation of an executable test case.

In a possible implementation, when recommending the test interface, the test case generation apparatus may recommend only a test interface function, in other words, each parameter value of the test interface is not involved. In this case, when the test interface is recommended, a similarity (that is, an action similarity) between a test intention implemented by the test interface and the test step may only be considered. The test interface is recommended based on the action similarity. After the user selects the test interface, a parameter value of the selected test interface is displayed accordingly. The test case generation apparatus may alternatively recommend the test interface function and recommend the parameter value of the test interface. In this case, when the test interface is recommended, the similarity (that is, the action similarity) between the test intention implemented by the test interface and the test step may be considered, and a similarity (that is, a data similarity) between the test data and a parameter of the test interface may also be considered. The test interface is recommended based on the action similarity and the data similarity.

According to the foregoing method, a plurality of different manners of recommending a test interface are provided. The recommendation manners are flexible and are applicable to different scenarios.

In a possible implementation, one test scheme may include one or more test steps. When obtaining the test interface set, the test case generation apparatus obtains, for any test step described in the test specification document, a plurality of test interfaces corresponding to the test step. The test interface set includes the plurality of test interfaces.

According to the foregoing method, the test interface set includes the test interface corresponding to each test step. The test interface set has a thorough coverage, which can ensure that a subsequently generated test case can implement more test steps.

In a possible implementation, one test step may be completed using only one step, or may be completed using a plurality of test substeps. In a case in which the test step is completed using the plurality of test substeps, the test case generation apparatus may recommend the test interface set while updating the test interface set based on a selection of the user. For example, the test case generation apparatus may determine a next test substep based on a test interface selected by the user for a previous test substep of the test step, then obtain one or more test interfaces corresponding to the next test substep of the test step, and update the test interface set by using the one or more test interfaces corresponding to the next test substep. For example, the one or more test interfaces corresponding to the next test substep may be placed at a front position in the test interface set. Alternatively, a test interface irrelevant to the next test substep may be deleted from the plurality of test interfaces corresponding to the test step. The test interface irrelevant to the next test substep may be a test interface in another implementation of the test step.

According to the foregoing method, the test interface set may be updated based on the selection operation performed by the user, to implement interactive intelligent recommendation, and improve user experience.

In a possible implementation, when obtaining the test specification document of the user, the test case generation apparatus may directly obtain the test specification document input by the user, or may update the test specification document. For example, after receiving the test specification document input by the user, the test case generation apparatus may analyze the test specification document, and mark a statement that does not comply with a syntax rule and that is in the test specification document; display, to the user, a correction suggestion for the statement that does not comply with the syntax rule; and then, update the test specification document based on selection performed by the user on the correction suggestion.

According to the foregoing method, the test case generation apparatus can check and update the test specification document, to ensure correctness of the test specification document.

In a possible implementation, the statement that does not comply with the syntax rule includes a part or all of the following: a statement with a spelling error, a statement with an incorrect syntax format, and a statement that violates a statement writing rule.

According to the foregoing method, the user is enabled to learn in time the statement that does not comply with the syntax rule and that is in the test specification document, to correct an incorrect writing manner of the user for the test specification document.

In a possible implementation, the test scheme may include a plurality of test paths. When generating one or more test cases, the test case generation apparatus may generate one of the test cases for each test path in the test scheme. The test case herein may be a test case text, or may be an executable test case script, or may alternatively include both a test case text and a test case script.

According to the foregoing method, the one or more test cases can cover all paths in the test scheme, to ensure comprehensiveness of the test cases.

According to a second aspect, an embodiment of this application further provides a test case generation apparatus. The test case generation apparatus has a function of implementing behavior in the method instances of the first aspect. For beneficial effects, refer to the descriptions of the first aspect. Details are not described herein again. The function may be implemented using hardware, or may be implemented by executing corresponding software using hardware. The hardware or software includes one or more modules corresponding to the foregoing function. In a possible design, a structure of the apparatus includes a receiving module, a recommendation module, and a generation module. These modules may perform a corresponding function in the method examples of the first aspect. For details, refer to the detailed descriptions in the method examples. Details are not described herein again.

According to a third aspect, this application further provides a computing device. The computing device includes a processor and a memory, and may further include a communication interface. The processor executes program instructions in the memory to perform the method provided in the first aspect or any one of the possible implementations of the first aspect. The memory is coupled to the processor, and stores the program instructions and data that are necessary in a test case generation process. The communication interface is configured to communicate with another device, for example, obtain a test specification document, send a test interface set, and send a test case.

According to a fourth aspect, this application provides a computing device system, where the computing device system includes at least one computing device. Each computing device includes a memory and a processor. The processor of the at least one computing device is configured to access code in the memory to perform the method provided in the first aspect or any one of the possible implementations of the first aspect.

According to a fifth aspect, this application provides a non-transient readable storage medium. When the non-transient readable storage medium is executed by a computing device, the computing device performs the method provided in the first aspect or any possible implementation of the first aspect. The storage medium stores a program. The storage medium includes but is not limited to a volatile memory, for example, a random access memory, or a non-volatile memory, such as a flash memory, a hard disk drive (hard disk drive, HDD), and a solid-state drive (solid-state drive, SSD).

According to a sixth aspect, this application provides a computing device program product. The computing device program product includes computer instructions. When the computer instructions are executed by a computing device, the computing device performs the method provided in the first aspect or any possible implementation of the first aspect. The computer program product may be a software installation package. When the method provided in the first aspect or any possible implementation of the first aspect needs to be used, the computer program product may be downloaded and executed by the computing device.

### BRIEF DESCRIPTION OF DRAWINGS

FIG. 1A is a schematic diagram of an architecture of a system according to this application;
FIG. 1B is a schematic diagram of an architecture of a system according to this application;
FIG. 2 is a schematic diagram of a scenario according to this application;
FIG. 3 is a schematic diagram of a test case generation method according to this application;
FIG. 4A to FIG. 4F-1 and FIG. 4F-2 are schematic diagrams of components of a test specification document specification according to this application;
FIG. 5 is a schematic diagram of statement parsing according to this application;
FIG. 6 is a schematic diagram of recommending a test interface according to this application;
FIG. 7 is a schematic diagram of a test specification document according to this application;
FIG. 8A to FIG. 8D are schematic diagrams of test cases generated based on a branch coverage policy according to this application;
FIG. 9A to FIG. 9D are schematic diagrams of test cases generated based on a condition coverage policy according to this application;
FIG. 10A to FIG. 10C are schematic diagrams of test cases generated based on a statement coverage policy according to this application;
FIG. 11 is a schematic diagram of a structure of a test case generation apparatus according to this application; and
FIG. 12 and FIG. 13 are schematic diagrams of structures of computing devices according to this application.

### DESCRIPTION OF EMBODIMENTS

Before a test case generation method provided in embodiments of this application is described, concepts related to embodiments of this application are first described.

### (1) Test specification document and test path

In embodiments of this application, the test specification document is a document describing a test scheme using a (limited) natural language (for example, Chinese or English).

The test scheme described in a test rule document in embodiments of this application may be a test scheme for a system or a subsystem, or a test scheme for an application or a service, or may be a test scheme for a specific module or component in a service or a system, or may be a test scheme for an interface.

In embodiments of this application, the test rule document may include test environment information, test data information, and test step information. Optionally, an information header may be further included.

The test environment information is used for describing information such as a test environment to which the test scheme is applicable and an environment object on which a test action is performed. The test data information is used for defining test data used in the test scheme and a constraint relationship between the test data. The test step information may describe a test step in the test scheme (for example, a test action in each test step). The information header is used for describing attribute information such as a name of the test specification document.

A test specification document for a system is used as an example. The test scheme records a test action of each test step. If test data or a test object needs to be referenced in the test step, the test specification document also records test data and an environment object that need to be input. When the test specification document describes the test scheme, some logic structure judgment statements are added. A plurality of different test paths (which may also be referred to as test branches) exist in the test scheme due to true or false judgment statements.

These logic structure judgment statements include but is not limited to:
an if statement, an if else statement, a for each statement, a validate that statement, and a random statement.

The foregoing judgment statements are merely examples. A specific type of a judgment statement is not limited in embodiments of this application. All statements that can implement that the different test paths exist in the test scheme are applicable to embodiments of this application.

The if statement is used as an example, and an execution process of the if statement is as follows. A value of a condition expression in parentheses after if is first determined. If the value of the expression is logical true (not 0), a body of if is executed, and then another statement after the body of if is executed. Otherwise, if the value of the expression is logical false (0), the body of if is not executed, and another statement after the body of if is directly executed. When the if statement is applied to the test specification document, there are two test paths: executing the body of if and skipping the body of if.

The if else statement is used as an example, and an execution process of the if else statement is as follows. A value of a condition expression in parentheses after if is first determined. If the value of the expression is logical true (not 0), a body of if is executed while a body of else is not executed, and then another statement after if-else is executed. Otherwise, if the value of the expression is logical false (0), the body of if is not executed while the body of else is executed, and then another statement after if-else is executed. When the if else statement is applied to the test specification document, there are two test paths: executing the body of if and skipping the body of if. When the if else statement is applied to the test specification document, there are two test paths: executing the body of if and executing the body of else.

Clearly, the more judgment statements in the test specification document, the more test paths involved in the test scheme.

In embodiments of this application, the test specification document may comply with a specific syntax rule. The syntax rule may be predefined, for example, preconfigured by a user or a test personal staff based on a habit of the user or the test personal staff. Specific content of the syntax rule is not limited in embodiments of this application.

### (2) Test case

In embodiments of this application, the test case is a test example that is generated using the test specification document as input and that is used for a single test path. The generated test case in embodiments of this application may be a test case text or an executable test case script. The test case describes a step sequence during a test, data that needs to be input in each step (for a step in which data needs to be input), and a test result that needs to be checked in the step.

### (3) Test interface

In embodiments of this application, the test interface is a segment of code that can implement test automation. The test interface may be a method, a function, a class, or the like. The test interface is usually a segment of code with a mature function. A specific test action can be automatically implemented by invoking the test interface. For example, a login step is used as an example. Generally, the login step may be divided into three substeps: entering an account, entering a password, and clicking to confirm. The step of entering the account is used as an example, an action of entering the account may be coded, to form a test interface for implementing the entering the account. When the login step is performed, the test interface for implementing the entering the account may be directly invoked. The account that needs to be entered is entered to the test interface as an input parameter, to complete the substep of entering the account.

A code language of the test interface is not limited in embodiments of this application/. For example, the code language may be Ruby, Python, Java, or tcl.

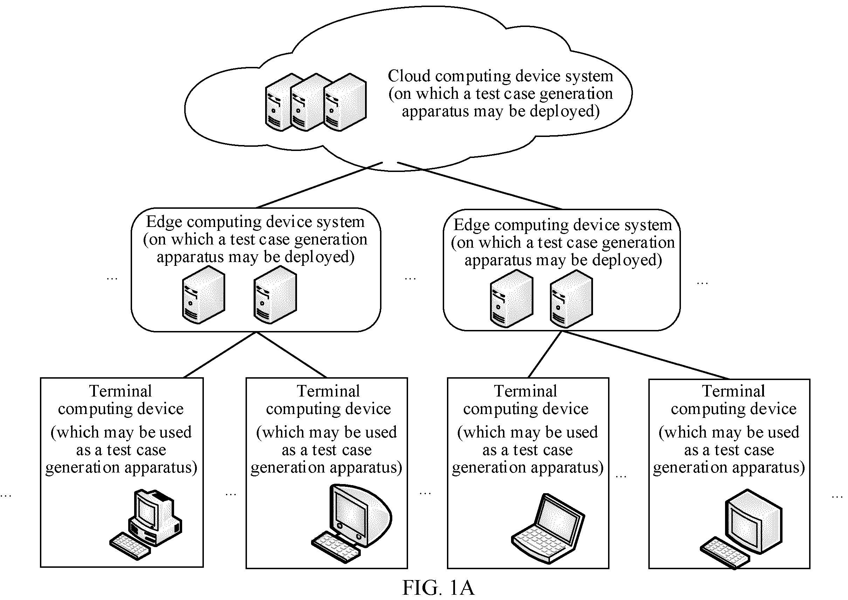

The test case generation method provided in embodiments of this application may be performed by a test case generation apparatus 100. The test case generation apparatus 100 may be a hardware apparatus, for example, a server or a terminal computing device, or may be a software apparatus and is specifically a set of software systems running on a hardware computing device. A location at which the test case generation apparatus 100 is deployed is not limited in embodiments of this application. For example, as shown in FIG. 1A, the test case generation apparatus 100 may run in a cloud computing device system (which includes at least one cloud computing device, for example, a server), or may run in an edge computing device system (which includes at least one edge computing device, for example, a server or a desktop computer), or may run on various terminal computing devices, for example, a laptop computer and a personal desktop computer.

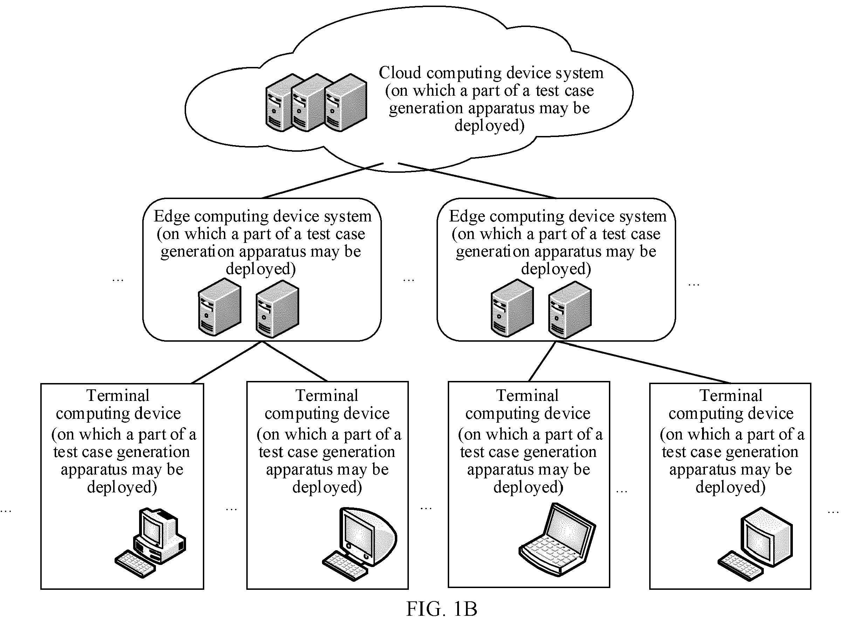

Logically, the test case generation apparatus 100 may alternatively be an apparatus including a plurality of modules. For example, the test case generation apparatus 100 may include an obtaining module, a parsing module, a collection module, and a providing module. Components of the test case generation apparatus 100 may be respectively deployed in different systems or servers. For example, as shown in FIG. 1B, the components of the apparatus may respectively run in three environments: a cloud computing device system, an edge computing device system, and a terminal computing device, or may run in any two of the three environments. The cloud computing device system, the edge computing device system, and the terminal computing device are connected through a communication path, and may perform communication and data transmission with each other. An application programming interface API test method provided in this embodiment of this application is collaboratively performed by all combination parts of the test case generation apparatus 100 running in the three environments (or any two of the three environments).

A deployment manner of the test case generation apparatus 100 is not limited in embodiments of this application. For example, the test case generation apparatus 100 may be an application program deployed on a cloud, and can provide a cloud service for a user. In other words, the test case generation apparatus 100 may be deployed in the edge computing device system or the cloud computing system. The user may obtain the cloud service from the test case generation apparatus 100 through a client 200 deployed on a user side. The test case generation apparatus 100 may alternatively be the terminal computing device deployed close to the user side. For example, the test case generation apparatus 100 may be one piece of application software on the terminal computing device, or may be a plug-in of one piece of application software on the terminal computing device.

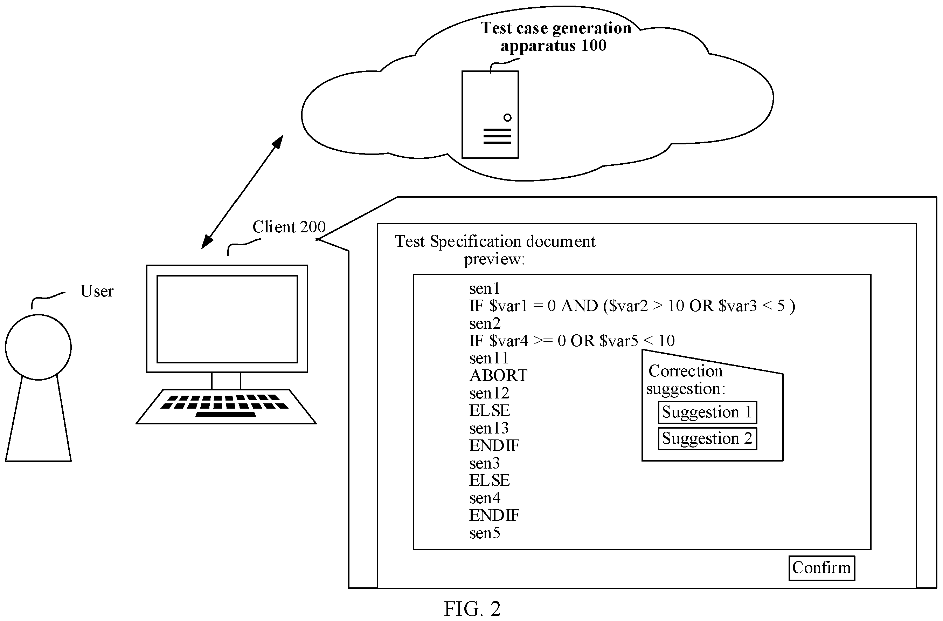

With reference to the accompanying drawings, the following describes an application scenario to which a relationship between the user, the test case generation apparatus 100, and the client 200 is applicable. Refer to FIG. 2.

In FIG. 2, an interface displayed by a display of the client 200 to the user is drawn as an example. The user may perform an operation on the client 200 through an external input/output apparatus (such as a display, a keyboard, or a mouse). For example, the user may output a test specification document on the client 200, view statements that do not comply with a syntax rule and that are in the test specification document and correction suggestions for these statements, select a correction suggestion, view a recommended test interface set, select a test interface from a value of the recommended test interface set, select a test case generation policy, and view a generated test case (for example, a test case text and/or an executable test case script).

The test case generation apparatus 100 can perform the test case generation method provided in embodiments of this application. For example, the test case generation apparatus 100 monitors the operation performed by the user on the client 200, mark the statements that do not comply with the syntax rule and that are in the test specification document, and may further provide the correction suggestions for these statements, and correct the test specification document based on selection performed by the user on the correction suggestion. The test case generation apparatus 100 may further recommend the test interface set to the user and display the generated test case.

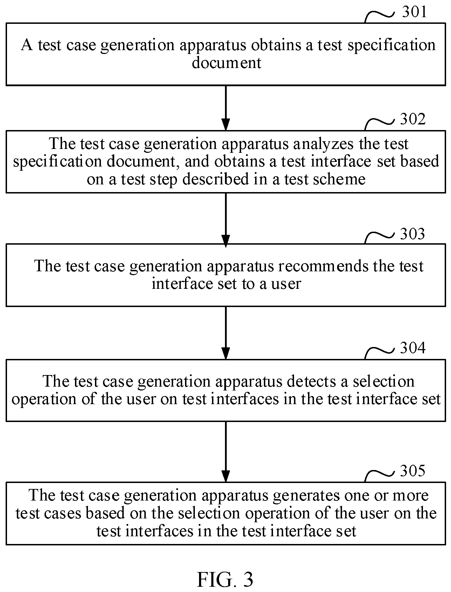

With reference to FIG. 3, the following describes a test case generation method according to an embodiment of this application. The method may be performed by a test case generation apparatus 100, and the method includes the following steps.

Step 301: The test case generation apparatus 100 obtains a test specification document.

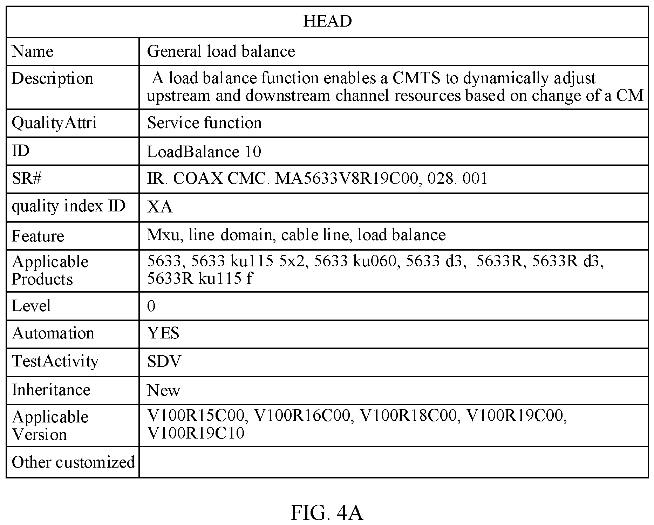

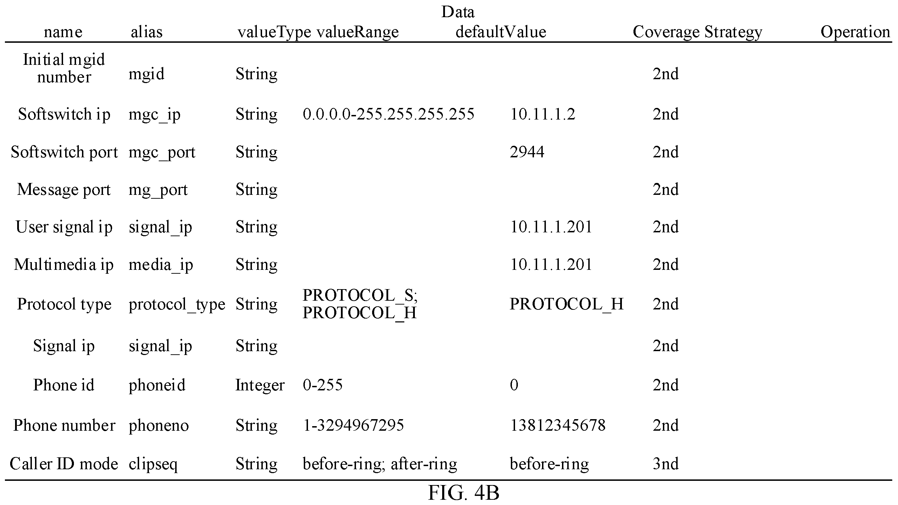

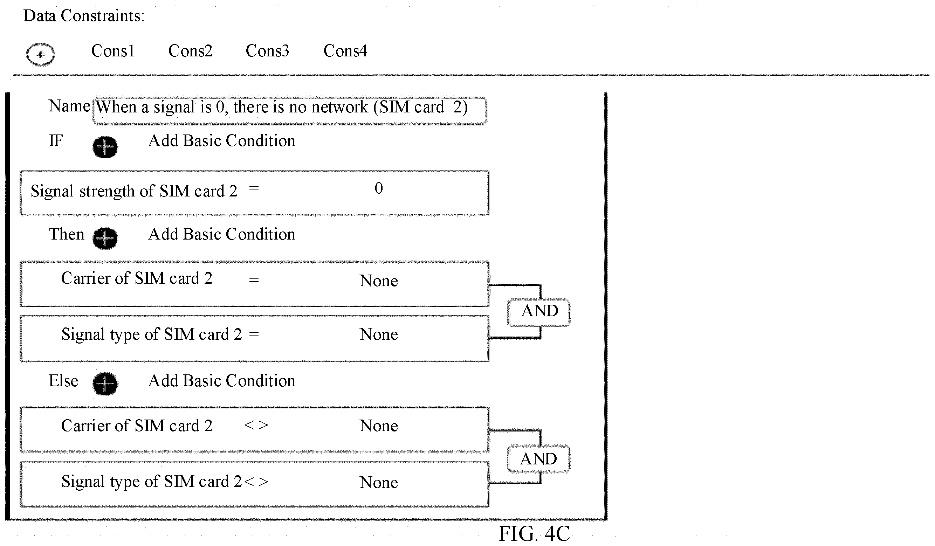

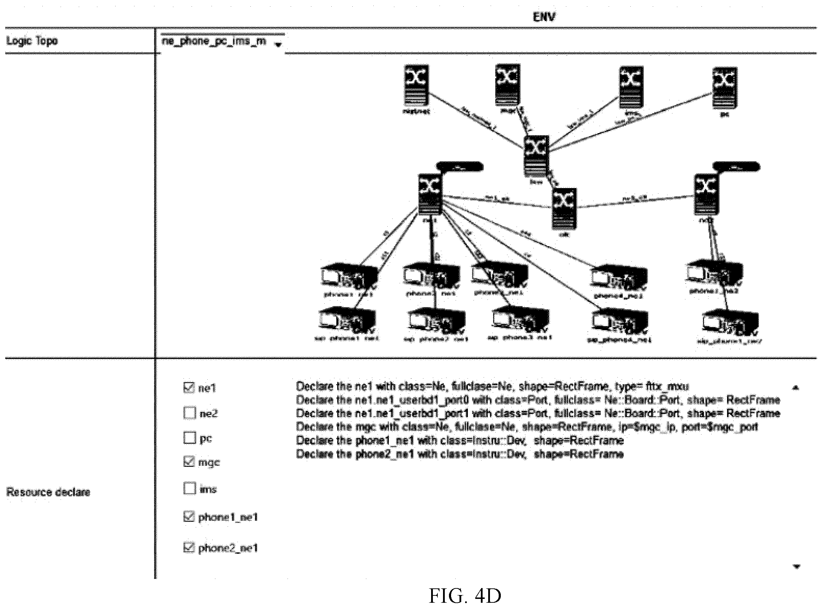

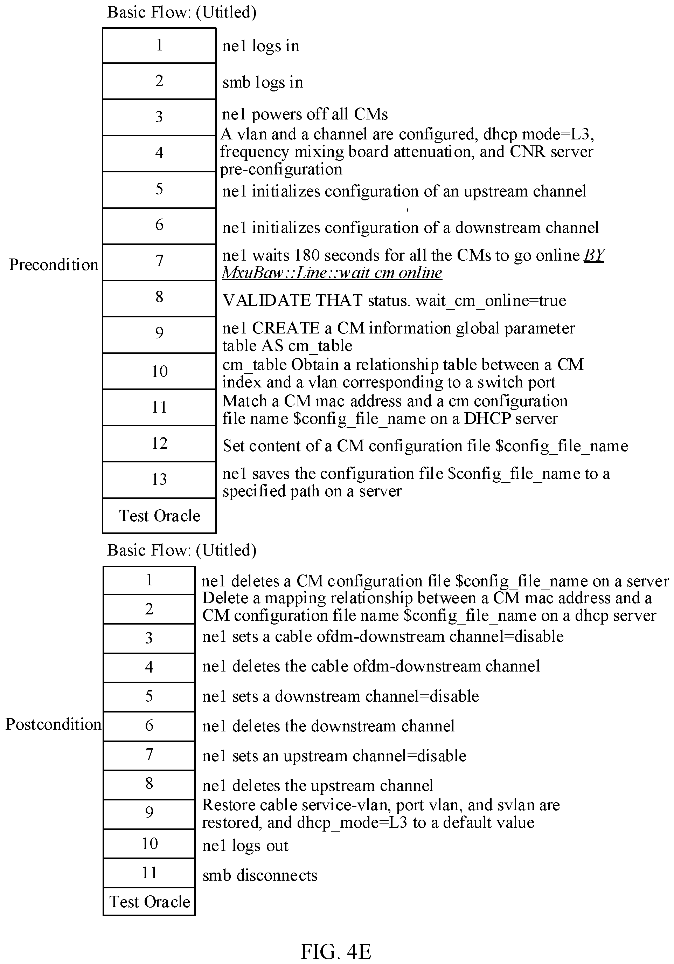

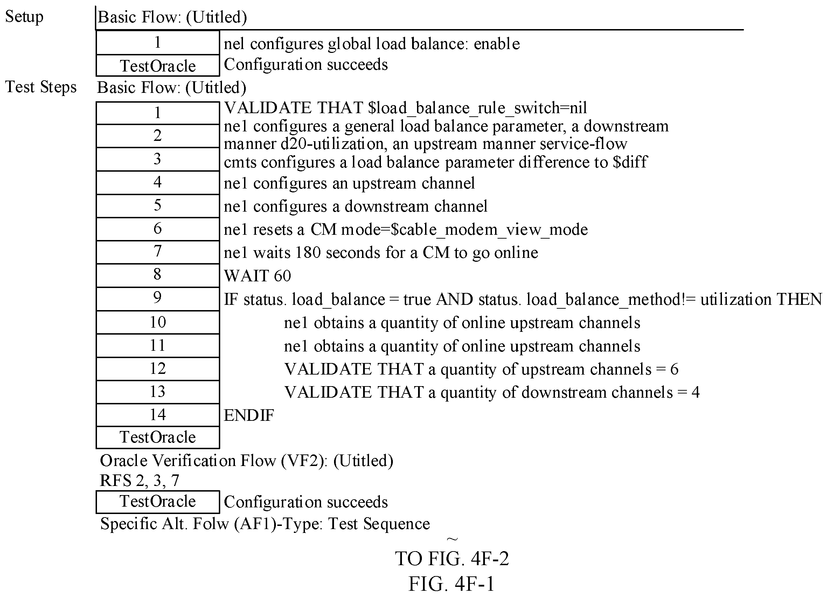

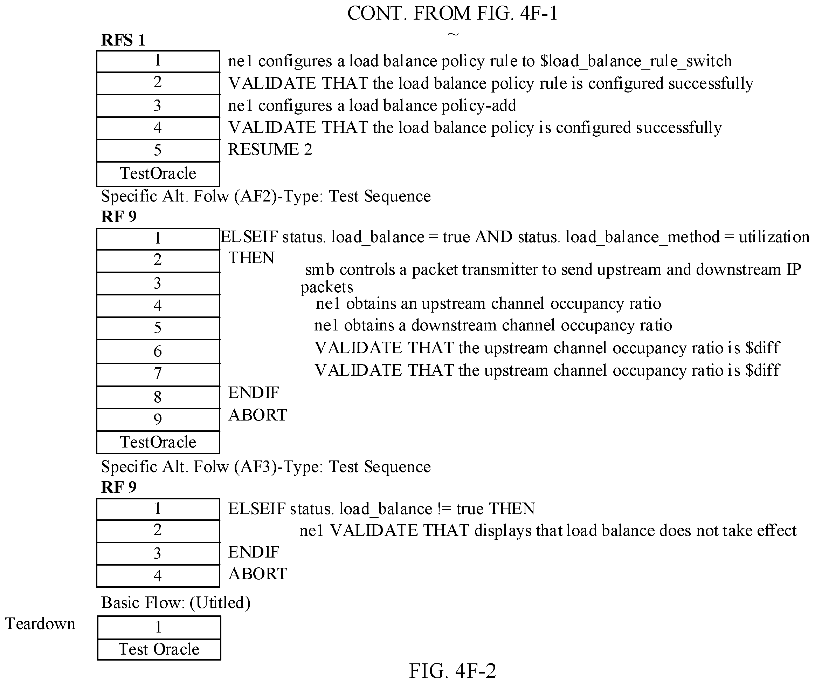

A user may transmit the test specification document to the test case generation apparatus 100 through a client 200. FIG. 4A to FIG. 4F-1 and FIG. 4F-2 show a test specification document transmitted by the user. FIG. 4A shows an information header of the test specification document, where the information header records attribute information such as a name and a function that are of a tested module. FIG. 4B shows data information in test data information in the test specification document, where the data information records information such as a parameter name, a parameter type, a parameter value range, and a default value. FIG. 4C shows data constraint information in the test data information in the test specification document, where the data constraint information records an association relationship between data. FIG. 4D shows test environment information in the test specification document, where the test environment information records information such as a test network topology and a test environment object. FIG. 4E shows a test preset action and a post-clear action part in test step information in the test specification document. FIG. 4F-1 and FIG. 4F-2 show the test step information in the test specification document, where the test step information records each test step.

After obtaining the test specification document transmitted by the user, the test case generation apparatus 100 may directly perform step 302. Alternatively, the test case generation apparatus 100 may first perform check processing on the test specification document transmitted by the user, to search for a statement that does not comply with a syntax rule and that is in the test specification document, and perform step 302 after the check is passed.

The check processing performed by the test case generation apparatus 100 on the test specification document transmitted by the user includes but is not limited to:
a spelling error check, a syntax format error check, and a statement writing violation check.

For any one of the foregoing checks, the test case generation apparatus 100 may further provide correction suggestions, and display the correction suggestions to the user. The user may confirm the correction suggestions, for example, agree to correction, select one of the correction suggestions, or reject the correction. After detecting a confirmation operation performed by the user on the correction suggestions, the test case generation apparatus 100 may update the test specification document based on the confirmation operation performed by the user. For example, the test case generation apparatus 100 may update the test specification document based on the correction suggestion agreed by the user or the selected correction suggestion. For another example, if the user rejects the correction, the test case generation apparatus 100 may maintain the test specification document.

The following describes the foregoing check processing and corresponding correction suggestions. It should be noted that the foregoing check processing is merely an example. A type of the check processing performed by the test case generation apparatus 100 on the test specification document is not limited in embodiments of this application.

### 1. Spelling error check

During a process of writing a test specification, a tester may misspell a test action invoking process in some systems, causing distortion of a natural language expression and failure to describe a test action that truly needs to be performed. This error affects generation of a test case.

A common spelling error is usually an input error caused by homophones, synonyms, or words with a similar structure. For such an error, the test case generation apparatus 100 may provide a correction suggestion for a correct character/word.

When performing the spelling error check, the test case generation apparatus 100 may first search for a position of a wrong word or a position of a wrong character, and then provide a correction suggestion for the wrong word or the wrong character.

When searching for the position of the wrong word, the test case generation apparatus 100 may traverse words in the test specification document. Each time a word is traversed, the test case generation apparatus 100 determines whether the word is a blank word, a stop word, a number, a letter, or the like. Subsequently, a professional lexical dictionary is used for detecting whether the word has a word frequency. If the word does not exist or the word frequency is lower than a threshold, the word is added to a suspicious list.

When searching for the position of the wrong character, the test case generation apparatus 100 detects the position of the wrong character based on a sliding window with a fixed length. The sliding window is used for extracting a character from the beginning of a statement. A trained error correction model (for example, an error correction model trained based on an n-gram training historical corpus) is used for scoring the extracted character. An average value of all scores is calculated. If a score of a specific character segment is lower than the average value, a position of the character is added to the suspicious list.

After finding the position of the wrong word and the position of the wrong character, the test case generation apparatus 100 may provide correction suggestions for wrong words at all positions and wrong characters at all positions. For example, the test case generation apparatus 100 traverses all the positions of the wrong words and all the positions of the wrong characters, and uses words with similar pronunciations or similar spellings as the correction suggestions.

### 2. Syntax format error check

A syntax error usually occurs when a tester does not fully understand a specified syntax structure or syntax rule. As a result, when the tester uses a related syntax to compile a statement in a test specification document, a keyword of a statement is missing, a keyword usage condition is not met, and so on. For this type of error, the keyword in the statement (the keyword may be a word that can represent a test action) usually may provide a suggestion for using a correct keyword, to notify a user of the specific correction suggestion to correct this type of error.

The test case generation apparatus 100 may identify a keyword in each statement in the test specification document. After identifying the keyword of each statement, the test case generation apparatus 100 identifies whether the keyword complies with a predefined syntax rule. If the keyword does not comply with the predefined syntax rule, the test case generation apparatus 100 may provide a suggestion for using a keyword that complies with the syntax rule.

### 3. Statement writing error check

For each component of a statement and a structure of the statement, the statement writing error check may include a subject check, a simple sentence check, an interaction check, a declarative sentence check, and a degree word check that are of the statement.

During the subject check, a Chinese natural language processing tool may be used for analyzing dependency syntax of the statement, to find a "subject-predicate relationship" and obtain a component that is of the statement and that is used as a subject. Whether the subject is an environment variable, a global variable, or a word, such as "The test system" that is applicable to being the subject is determined. If the statement does not have the subject, there is a statement writing error.

During the simple sentence check, a Chinese natural language processing tool is used for analyzing dependency syntax of the statement, to find a "subject-predicate relationship" and a "verb-object relationship". If there is more than one subject-predicate relationship, it is considered that the statement is not a simple sentence. If there is more than one verb-object relationship corresponding to different verbs, it is considered that the statement is not a simple sentence.

During the interaction check, a Chinese natural language processing tool is used for analyzing dependency syntax of the statement, to find a "parallel relationship". If there is the parallel relationship, it is considered that two interaction parties are not clear. In addition, a correction suggestion is provided for the statement to notify the user that there is a complex statement and a problem of unclear expression.

During the declarative sentence check, determining may be made using a general rule. For example, whether question symbols or words such as "?", "ma", "me", "wei shen me", and "zen me le" are used in the statement may be identified. If these question symbols or words are used, it is inferred that the statement is not a declarative sentence. In addition, a correction suggestion is provided for the statement to notify the user that the statement is an interrogative sentence and it is suggested that the interrogative sentence be replaced with a declarative sentence.

During the degree word check, a Chinese natural language processing tool is used for performing part-of-speech tagging on words in the statement, to find all adjectives. If an adjective starts with "hen", "fei chang", "ke neng", or the like, it is considered that the statement uses a degree adverb. In addition, a correction suggestion is provided for the statement to notify the user that there is the degree adverb in the statement and it is suggested that the degree adverb be deleted.

After the test case generation apparatus 100 updates the test specification document based on the confirmation operation performed by the user on the correction suggestion, the test case generation apparatus 100 may analyze the updated test rule document, that is, perform step 302.

Step 302: The test case generation apparatus 100 analyzes the test specification document, and obtains a test interface set based on a test step described in a test scheme.

When analyzing the test specification document, the test case generation apparatus 100 may analyze each statement in the test specification document, to determine a reference relationship between statements. When a judgment statement is involved, test paths under different situations (for example, a condition is met and a condition is not met) may further be analyzed.

In embodiments of this application, the test case generation apparatus 100 may parse and decompose any statement into a sentence pattern (natures), statement content (content), and a word (word). Optionally, a test interface and parameter mapping table (Mapping Table) may further be included. The sentence pattern indicates a statement type, for example, an if sentence pattern. The statement content indicates content of the statement. The word is a word obtained through splitting. The test interface and parameter mapping table is a mapping table. After the user selects a test interface and a corresponding parameter value for the statement subsequently, the test interface and the corresponding parameter value that are selected by the user may be filled in the test interface and parameter mapping table.

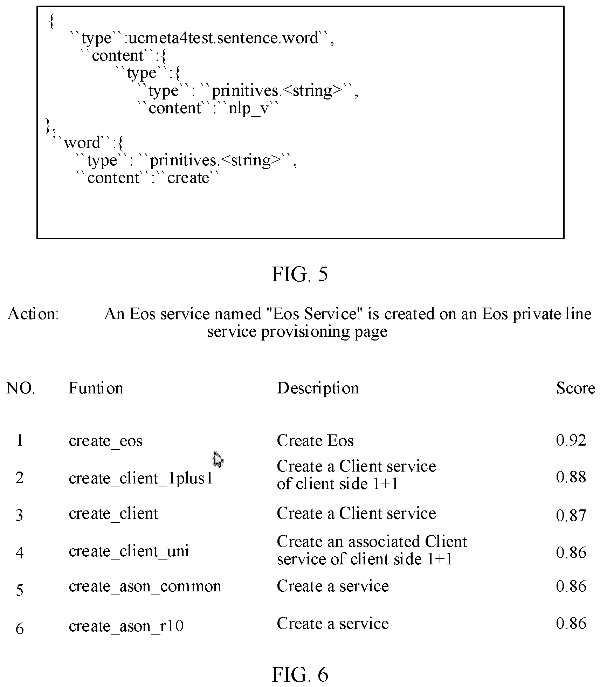

FIG. 5 shows a decomposition result of a statement by a test case generation apparatus 100. Description information after "type" is a sentence pattern of the statement. Description information after "content" indicates statement content of the statement. Description information after "word" indicates a word obtained through splitting.

The test case generation apparatus 100 may further split the statement, and analyze a test step in the test scheme.

For one test step, in addition to a test action involved in the test step, the test step may further include test data that needs to be used in the test step.

For one test step, the test case generation apparatus 100 may determine one or more test interfaces for the test step. In other words, one test step may correspond to the one or more test interfaces, where each test interface may implement the test step. The test interface set may include the one or more test interfaces corresponding to each test step.

An interface recommendation component may be disposed in the test case generation apparatus 100. The interface recommendation component may be configured to determine the one or more test interfaces for the test step.

A specific type of the interface recommendation component is not limited in embodiments of this application. For example, the interface recommendation component may be a machine language model, or may be a neural network model.

The interface recommendation component may be trained in advance, so that the interface recommendation component can determine one or more test interface functions for each test step.

The following describes a training process of the interface recommendation component.

First, the test interface is learned and understood. Through learning and understanding the test interface, the test interface is converted into a target action described in a natural language.

In a learning and understanding process, a language type of the test interface may be determined first, and a language parser related to the language type is invoked to parse the test interface, to generate a syntax tree instance of the test interface. Based on a definition document of a tested object interface, rule matching is performed on the tested object interface encapsulated in the test interface. In this way, semantics of the test interface is understood by understanding semantics of the tested object interface, and the test interface is converted into a test intention described in the natural language.

In other words, there is a one-to-one correspondence between test interfaces and test intentions described in the natural language.

Then, a training set is prepared.

The training set includes a plurality of sample pairs, and each sample pair includes a test step described using the natural language and a test intention described using the natural language. Based on a correspondence between the test step described using the natural language and the test intention described using the natural language (which is essentially a correspondence between the test step described using the natural language and the test interface), the sample pairs may be divided into positive sample pairs and negative sample pairs. The positive sample pair indicates that the test step is related to the test intention, and a similarity is high. In other words, the test step can be implemented using the test interface. The negative sample pair indicates that the test step is unrelated to the test intention, and a similarity is low. In other words, the test step cannot be implemented using the test interface.

Then, each sample pair in the training set is vectorized. The test step and the test intention that are described in the natural language are converted into vector forms. A vectorization process is briefly described as follows. First, a dictionary file is generated based on corpus input. Each Chinese character or English letter has a number. Original text input is converted into a vector based on the dictionary file.

Then, in a supervised learning manner, the interface recommendation component is trained using a vectorized training set.

After the interface recommendation component is trained, when the test step described using the natural language is input to the interface recommendation component, a test intention with a high similarity to the test step may be output, so that a test interface corresponding to the test intention is obtained and recommended. For any test step in the test scheme described in the test interface document, a statement describing the test step may be pre-processed first, to decompose a test action and test data that are in the test step.

Specifically, the interface recommendation component may remove a syntax structure of the statement and extract the test data.

### A. Remove the syntax structure of the statement:

For example, keywords such as VALIDATE THAT, AS, and @bod are defined in a syntax rule. These keywords usually do not have actual action meaning, but represent the syntax structure used by the statement. When the syntax structure of the statement is removed, these keywords used for representing the syntax structure may be removed. In this way, a test action involved in the test step can be completely retained to some extent, so that information input into a function recommendation model is more accurate.

Examples are as follows. "VALIDATE THAT client service is successfully created" is processed as "Client service is successfully created". "Create a client service AS @bod" is processed as "Create a client service".

### B. Extract the test data, such as a test parameter and a value of the test parameter:

The test data usually is data that needs to be input or a value that needs to be assigned to the test parameter when a test action is performed. The test data does not affect a function of the test interface. Therefore, to enable the interface recommendation component to determine the test interface more accurately, the test data may be extracted. The extracted test data may be used for further filtering test interfaces that need to be recommended. Corresponding description of this part is made subsequently.

Examples are as follows. "Create a client service whose delivery mode = precalc, specified bandwidth = 10M, and delay policy = false" is processed as "Created client service". In addition, three parameters are extracted as follows: "the delivery mode", "the specified bandwidth", and "the delay policy", where values of the three parameters are "precalc", "10M", and "false" respectively.

In an extraction process, word segmentation is first performed to obtain a word segmentation result including information such as part-of-speech. "=" is used for identifying a definition of the parameter, a word before "=" is a parameter name, and a word after "=" is a parameter value. Finally, paired information (including the parameter name and the parameter value) can be obtained.

In a word segmentation algorithm, punctuations, whitespace characters, and special characters are identified as a "/w" type (a punctuation type). Therefore, when the parameter name and the parameter value are extracted, the extraction ends if these characters are encountered, and it is considered that whole parameter content has been found.

For the statement describing the test step, the statement whose syntax structure is removed and whose test data is extracted is vectorized and input to the interface recommendation component. The interface recommendation component outputs one or more test intentions, and further obtains and recommends a test interface corresponding to each test intention.

When the interface recommendation component outputs any one of the test intentions, the interface recommendation component may further output an action similarity between the test intention and the test step. The action similarity is used for describing a similarity between the test intention and the test step. A manner of calculating the action similarity is not limited in embodiments of this application. For example, the action similarity may be determined based on standards such as mean average precision (mean average precision, MAP), normalized discounted cumulative gain (normalized discounted cumulative gain, NDCG)@3, and NDCG@5.

It should be noted that, the test interface corresponding to the one or more test intentions output by the interface recommendation component usually can complete the test step to some extent. However, in code implementation, the test interface corresponding to the one or more test intentions cannot completely implement the test step. For example, for a test step implementing a multiplication operation, there may be a plurality of test interfaces that can implement the multiplication operation. However, a test interface can implement the multiplication operation in a specific range, a test interface can output a result accurate to only one decimal place, and a test interface can output a result accurate to last 10 decimal places. In terms of test step meaning, the three test interfaces can perform the multiplication operation. However, there may be specific limitations in the code implementation. This is why the interface recommendation component can recommend a plurality of test interfaces.

The one or more test interfaces determined based on output of the interface recommendation component may be directly used as a function in the test interface set. Alternatively, the one or more test interfaces may be filtered first, and a filtered test interface is used as a function in the test interface set.

A filtering manner is not limited herein. For example, some test interfaces are randomly deleted, and only remaining test interfaces are retained. For another example, a test interface with a high similarity may be retained based on the action similarity.

Definitely, during actual application, the one or more test interfaces may not be filtered, but the one or more test interfaces are sorted. For example, a test interface with a high action similarity may be placed at a front position, and a test interface with a low action similarity may be placed at a back position.

In embodiments of this application, when one test interface needs a plurality of parameters, the test case generation apparatus 100 may further calculate, for any parameter, a data similarity of the parameter. The data similarity refers to a similarity between the parameter and test data recorded in the test specification document.

Data similarities of the parameters of the test interface are calculated in a similar manner. The following uses a data similarity of one parameter as an example. Test data A recorded in the test specification document includes a parameter name a and a parameter value b. A parameter D in a parameter list defined by the test interface may include a parameter name x, parameter description y, and a parameter default value z. Similarities of six groups of texts: (a, x), (a, y), (a, z), (b, x), (b, y), and (b, z) are calculated. A maximum value in the six groups is selected as a data similarity between the input test data A and the parameter D defined by the test interface.

In addition to the data similarity of the parameter, a data similarity of the test interface may further be calculated based on the data similarity of each parameter. A manner of calculating the data similarity of the test interface is not limited herein. For example, the data similarity of the test interface may be obtained by using an average value or a maximum value of data similarities of the plurality of parameters. If the test interface has only one parameter, a data similarity of the parameter may be used as the data similarity of the test interface, or may be used as the data similarity of the test interface after the data similarity of the parameter is processed.

After the data similarity of the test interface is determined, the one or more test interfaces may be sorted directly using the data similarity of the test interface. Alternatively, the one or more test interfaces may be sorted with reference to the action similarity and the data similarity. For example, weighted summation may be performed on an action similarity and a data similarity that are of a test interface (where weight values of the action similarity and the data similarity may be preset). A value obtained through the weighted summation is used as a sorting indicator, and the one or more test interfaces are sorted based on the sorting indicator of each test interface.

It should be noted that, in embodiments of this application, one or more test interfaces determined in any test step are processed and sorted, or may be filtered. A sorting manner is similar to a filtering manner, to be specific, the one or more test interfaces may be processed and filtered based on the action similarity and/or the data similarity.

In embodiments of this application, a specific test step may be implemented in two manners. In one manner, one test step is implemented using one test interface. In the other manner, one test step is implemented using a plurality of interface tests.

A login step is used as an example herein, where the login step may be guest login, fingerprint login, or account login. A guest login manner is direct, and can be implemented by only clicking "Guest Login" and using one test interface. A fingerprint login manner is simple, and includes two substeps: entering a fingerprint and clicking to log in. An account login manner is slightly complex, and includes three substeps: entering an account, outputting a password, and clicking to confirm. Each substep may be implemented using one test interface. In this way, the fingerprint login manner requires cooperation of two test interfaces. The account login manner requires cooperation of three test interfaces.

In other words, in some scenarios, one test step may be divided into a plurality of test substeps, and these test substeps are in sequence or are in specific association with each other. For each test substep, the interface recommendation component may determine one or more test interfaces.

When detecting a test interface selected by the user for a test substep in the test step, the test case generation apparatus 100 may determine a test substep that needs to be executed after the test substep in the test step. One or more test interfaces corresponding to the test substep that needs to be executed subsequently may be determined using the interface recommendation component.

For example, in the login step, after the user selects a test interface for implementing the entering a fingerprint, the test case generation apparatus 100 may determine that the fingerprint login manner is selected in the login step. A test substep following the test substep of the entering a fingerprint is the clicking to log in. The test case generation apparatus 100 obtains, through the interface recommendation component, one or more test interfaces corresponding to the clicking to log in. In the test interface set determined by the test case generation apparatus 100, a test interface corresponding to the login step may not include a test interface corresponding to the account login manner, or the test interface corresponding to the account login manner is placed at a back position.

In a scenario in which one test step is divided into a plurality of test substeps, it may be understood that a selection operation performed by the user and a recommendation operation (that is, recommending a test interface set) performed by the test case generation apparatus 100 are synchronous (which may also be referred to as interactive recommendation). The test case generation apparatus 100 may update the recommended test interface set based on the selection operation performed by the user. The update herein may be deleting some unnecessary test interfaces (for example, deleting the test interface corresponding to the account login manner in the foregoing example), or may be re-sorting the test interface set in the test interface set (for example, placing the test interface corresponding to the account login manner in the back position, and placing the test interface corresponding to the substep of clicking to lo in at a front position).

Step 303: The test case generation apparatus 100 displays the test interface set to the user, that is, recommends the test interface set to the user.

After determining the test interface, the test case generation apparatus 100 may display the test interface to the user, for example, send the test interface to the client 200, and recommend the test interface in the test interface set to the user.

The test case generation apparatus 100 displays the test interface set to the user in two manners.

In a first manner, the test interface includes a test interface function. In other words, an input parameter of the test interface is not recommended. Sorting of test interfaces may be determined based on an action similarity.

In this recommendation manner, any test interface displayed by the test case generation apparatus 100 to the user is the test interface function. In other words, a function format of the test interface is provided. No value is assigned to a parameter in the test interface. In other words, the input parameter of the test interface is not provided.

After selecting one of the test interfaces, the user may define a parameter value of the test interface. The test case generation apparatus 100 may alternatively recommend the parameter value of the test interface to the user.

In a case in which the test interface has a plurality of parameters, the test case generation apparatus 100 may recommend values of the plurality of parameters to the user. The parameter values of the test interface recommended by the test case generation apparatus 100 to the user may be determined after sorting based on data similarities of the parameters. For example, the test case generation apparatus 100 may place a parameter value with a high data similarity at a front position, and place a parameter value with a high data similarity at a back position.

In a case in which the test interface has one parameter, the test case generation apparatus 100 may recommend a value of the parameter to the user. The value of the parameter may be the test data recorded in the test specification document.

In a second manner, the test interface includes a test interface function and a parameter of the test interface. In other words, both the test interface function and an input parameter of the test interface are recommended. Sorting of test interfaces may be determined based on a data similarity and an action similarity.

In this recommendation manner, any test interface displayed by the test case generation apparatus 100 to the user includes the test interface function and a parameter value of the test interface. In other words, a function format and the parameter value that are of the test interface are provided.

Step 304: The test case generation apparatus 100 detects the selection operation performed by the user on the test interfaces in the test interface set.

Based on the foregoing description, it can be learned that, for any test step in the test scheme, there are one or more corresponding test interfaces in the test interface set.

As shown in FIG. 6, when displaying the test interface set to the user, the test case generation apparatus 100 may display the test interface set at a granularity of a test step. FIG. 6 is a schematic diagram in which a user views one or more test interfaces corresponding to one test step. One or more test interfaces corresponding to a same test step may be integrated together, and the test interfaces may be sorted based on a sequence of test steps.

When viewing a test step each time, the user may browse one or more test interfaces corresponding to the test step. After selecting a test interface for the test step, the user may view a next test step and browse one or more test interfaces corresponding to the test step.

In a scenario in which one test step is divided into a plurality of test substeps, the user first selects a test interface for a first test substep when viewing the test step. After detecting the test interface of the first test substep selected by the user, the test case generation apparatus 100 may determine subsequent test substeps, for example, determine a second test substep and a third test substep. The test case generation apparatus 100 may place, in the front, one or more test interfaces corresponding to the second test substep from the one or more test interfaces corresponding to the test step, so that the user can view and select. After the user selects a test interface for the second test substep, the one or more test interfaces corresponding to the second test substep may be placed at the front, until a test interface for a last test substep in the test step is selected.

Step 305: The test case generation apparatus 100 generates one or more test cases based on the selection operation performed by the user on the test interfaces in the test interface set.

After detecting the selection operation performed by the user, the test case generation apparatus 100 may determine the test interface selected by the user. The test case generation apparatus 100 may construct a test case by using the test interface selected by the user.

It should be noted that, when a judgment statement exists in the test specification document, there are a plurality of test paths in the test scheme. For each test path, the test case generation apparatus 100 may generate one test case for each test path.

For a manner in which the plurality of test paths exist, the user may pre-configure a test case generation policy through the client 200. The test case generation apparatus 100 may generate one test case for each test path based on the test case generation policy configured by the user. Certainly, the test case generation policy may alternatively be configured by default. Embodiments of this application provide three test case generation policies.

### Policy 1: Branch coverage policy

The branch coverage policy requires that each determining result in a judgment statement appear at least once. In the branch coverage policy, path division is performed at a granularity of a determining result.
1. A start point of each test case is a first test step in the test scheme.
2. An end point of the test case is encountering of an abort statement or is a last test step of the test scheme.
3. When a statement of the test step is a common statement, the statement is added to the test case.
4. When the statement of the test step is a conditional statement, a statement of true condition and a statement of false condition each represent one test case. In addition, the statement in a conditional statement block is processed accordingly.
5. When the statement of the test step is a validate that statement, and a test case in a different test path is performed based on a condition of validate that being true or false.
6. When the statement of the test step is a resume statement, the test step corresponding to the resume statement in the test scheme is found and the test step is executed.

### Policy 2: Condition coverage policy

The condition coverage policy requires that all possibilities of each condition in a judgment statement appear at least once. In the condition coverage policy, path division is performed at a granularity of a possible value of the condition.

A test case generated based on the condition coverage policy may be modified based on the test case generated based on the branch coverage policy, to split a complex condition in a branch coverage. When the complex condition is true, each condition is true. When the complex condition is false, each condition is false. A quantity of abstract test cases generated in this manner is the same as branch coverages. A quantity of test cases generated after a value of each condition is set may be less than the branch coverages.

For example, Branch coverage: true: $var1 = 3 AND ($var2 > 0 OR $var3 <= 10)

Condition coverage: true: $var1 = 3
true: $var2 > 0
true: $var3 <= 10

In the branch coverage policy, a condition is determined as long as $var1 = 3 is true and any one of $var2 > 0 and $var3 <= 10 is true, and there are three situations of condition combinations.

The condition coverage limits the situations of condition combinations. Therefore, fewer test cases are generated.

### Policy 3: Statement coverage policy

The statement overwriting policy requires that each statement in a program be executed at least once.

When a test case is generated based on the statement coverage policy, a statement on which an operation needs to be performed and that is in the test step may be found first (where special statements such as an if statement, a validate that statement, an abort statement, and a resumestep statement are excluded). Test cases generated based on the branch coverage are traversed. Each time one test case is taken out, a sequence of all statements of the test case is recorded. When the sequence of all the statements covers the statement on which an operation needs to be performed, traversal stops.

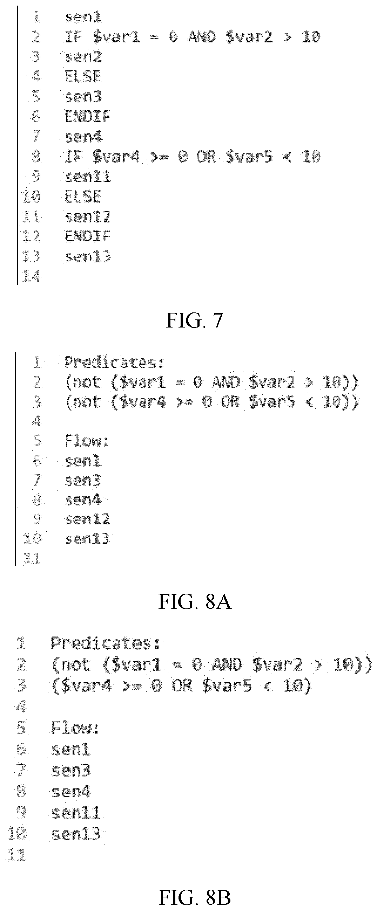

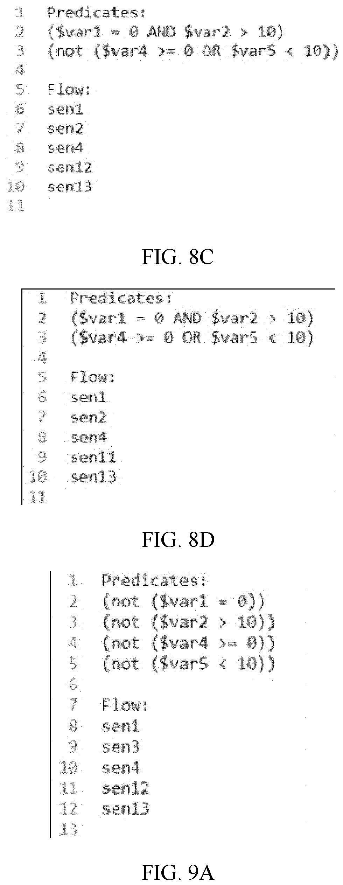

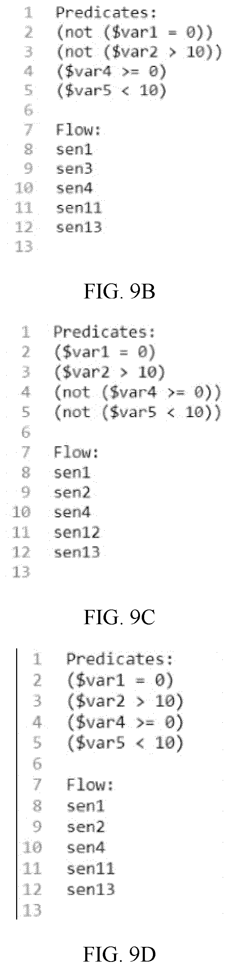

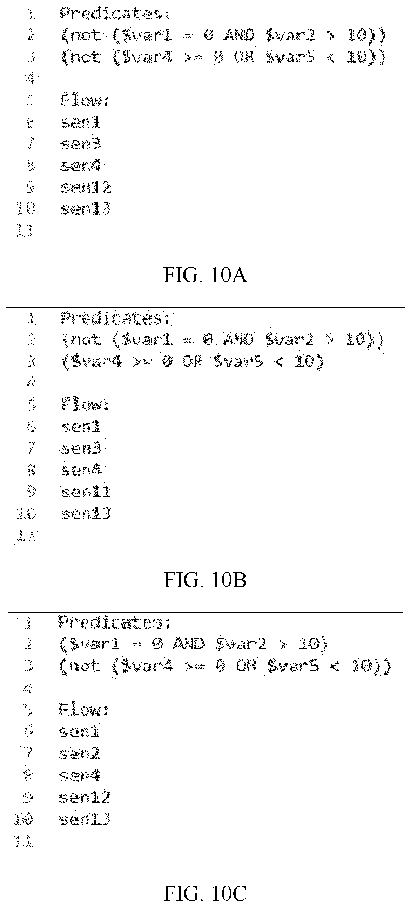

FIG. 7 shows steps in a test scheme described in a test specification document. The test specification document includes judgment statements such as an if else statement and an if statement. Therefore, there are a plurality of different test paths. FIG. 8A to FIG. 8D are schematic diagrams of test cases generated based on a branch coverage policy. FIG. 9A to FIG. 9D are schematic diagrams of test cases generated based on a condition coverage policy. FIG. 10A to FIG. 10C are schematic diagrams of test cases generated based on a statement coverage policy.

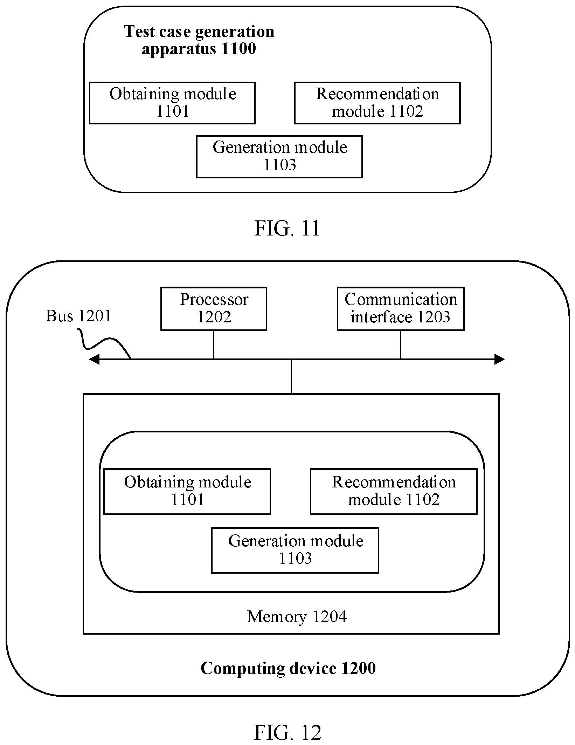

Based on a same inventive concept as the method embodiments, an embodiment of this application further provides a test case generation apparatus. The test case generation apparatus is configured to perform the method performed by the test case generation apparatus 100 in the foregoing method embodiments. As shown in FIG. 11, the test case generation apparatus 1100 includes an obtaining module 1101, a recommendation module 1102, and a generation module 1103. Specifically, in the test case generation apparatus, modules are connected through a communication path.

The obtaining module 1101 is configured to obtain a test specification document of a user. The test specification document includes a test scheme described based on a natural language. The test specification document may meet a specific syntax rule. The obtaining module 1101 may perform step 301 in the embodiment shown in FIG. 3.

The recommendation module 1102 is configured to recommend a test interface function set to the user based on a test step described in the test scheme. The test interface set includes a plurality of test interfaces for implementing a same test step. The recommendation module 1102 may perform step 302 and step 303 in the embodiment shown in FIG. 3.

The generation module 1103 is configured to generate one or more test cases based on a selection operation performed by the user on the test interfaces in the test interface set, and may display the one or more test cases to the user. The generation module 1103 may perform step 304 and step 305 in the embodiment shown in FIG. 3.

In a possible implementation, the test interface recommended by the recommendation module 1102 may include a test interface function, or may include both a test interface function and a parameter value of the test interface.

In a possible implementation, when the recommendation module 1102 recommends the test interface set to the user based on the step description of the test scheme, if the test specification document records one or more test steps, for any one of the test steps described in the test specification document, a plurality of test interfaces corresponding to the test step are obtained. The test interface set includes the plurality of test interfaces.

In a possible implementation, when one test step may be implemented using a plurality of test substeps, and when the recommendation module 1102 obtains the plurality of test interfaces corresponding to the test step, the recommendation module 1102 may obtain, based on a test interface selected by the user for a previous test substep in the test step, one or more test interfaces corresponding to a next test substep in the test step.

In a possible implementation, when obtaining the test specification document of the user, the obtaining module 1101 may first receive the test specification document input by the user; analyze the test specification document, and mark a statement that does not comply with a syntax rule and that is in the test specification document; display, to the user, a correction suggestion for the statement that does not comply with the syntax rule; and then, update the test specification document based on selection performed by the user on the correction suggestion.

In a possible implementation, the statement that does not comply with the syntax rule includes a part or all of the following:
a statement with a spelling error, a statement with an incorrect syntax format, and a statement that violates a statement writing rule.

In a possible implementation, when generating the one or more test cases, the generation module 1103 may generate one of the test cases for each test path in the test scheme.

The module division in embodiments of this application is an example, and is merely logical function division. There may be another division manner during an actual implementation. In addition, functional modules in embodiments of this application may be integrated into one processor, or each of the functional modules may exist physically, or two or more modules may be integrated into one module. The integrated module may be implemented in a form of hardware, or may be implemented in a form of a software functional module.

When the integrated module is implemented in the form of the software functional module and is sold or used as an independent product, the integrated module may be stored in a computer-readable storage medium. Based on such an understanding, the technical solutions of this application essentially, or the part contributing to the conventional technology, or a part or all of the technical solutions may be embodied in a form of a software product. The computer software product is stored in a storage medium, and includes several instructions to enable a terminal device (which may be a personal computer, a mobile phone, a network device, or the like) or a processor (processor) to perform a part or all of steps of the method in embodiments of this application. The foregoing storage medium includes: any medium that can store program code, such as a USB flash drive, a removable hard disk, a read-only memory (read-only Memory, ROM), a random access memory (Random Access Memory, RAM), a magnetic disk, or an optical disc.

This application further provides a computing device 1200 shown in FIG. 12. The computing device 1200 includes a bus 1201, a processor 1202, a communication interface 1203, and a memory 1204. The processor 1202, the memory 1204, and the communication interface 1203 communicate with each other through the bus 1201.

The processor 1202 may be a central processing unit (central processing unit, CPU). The memory 1204 may include a volatile memory (volatile memory), for example, a random access memory (random access memory, RAM). The memory 1204 may alternatively include a non-volatile memory (non-volatile memory), for example, a read-only memory (read-only memory, ROM), a flash memory, an HDD, or an SSD. The memory stores executable code. The processor 1202 performs the method described in FIG. 3. The memory 1204 may further include other software modules (for example, a plurality of modules in an API test apparatus 800) required for running a process, such as an operating system. The operating system may be LINUX^{™}, UNIX^{™}, WINDOWS^{™}, or the like.

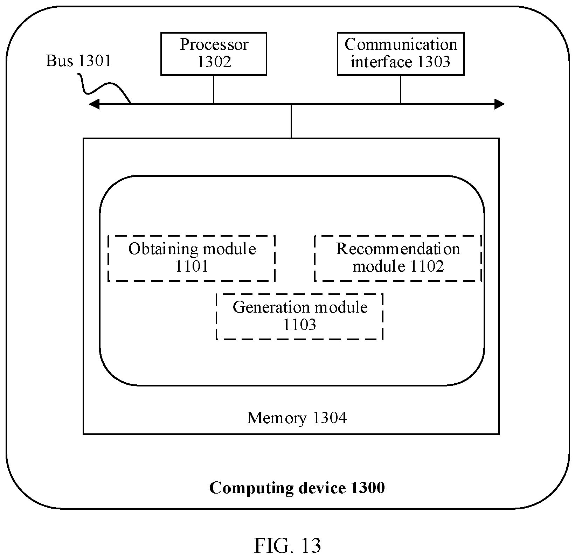

This application further provides a computing device system, where the computing device system includes at least one computing device 1300 shown in FIG. 13. The computing device 1300 includes a bus 1301, a processor 1302, a communication interface 1303, and a memory 1304. The processor 1302, the memory 1304, and the communication interface 1303 communicate with each other through the bus 1301. The at least one computing device 1300 in the computing device system communicates with each other through a communication path.

The processor 1302 may be a CPU. The memory 1304 may include a volatile memory, for example, a random access memory. The memory 1304 may alternatively include a non-volatile memory, for example, a read-only memory, a flash memory, an HDD, or an SSD. The memory 1304 stores executable code. The processor 1302 executes the executable code to perform any part or all of the method described in FIG. 3. The memory may further include other software modules required for running a process, such as an operating system. The operating system may be LINUX^{™}, UNIX^{™}, WINDOWS^{™}, or the like.

The at least one computing device 1300 in the computing device system establishes communication with each other through a communication network. Any one or more modules in the test case generation apparatus 1100 run on each computing device 1300.

The descriptions of the procedures corresponding to the foregoing accompanying drawings have respective focuses. For a part that is not described in detail in a specific procedure, refer to related descriptions of another procedure.

A part or all of the foregoing embodiments may be implemented using software, hardware, firmware, or any combination thereof. When the software is used for implementation, the part or all of the embodiments may be implemented in a form of a computer program product. The computer program product includes computer program instructions. When the computer program instructions are loaded and executed on a computer, the procedures or functions shown in FIG. 3 according to embodiments of the present invention are all or partially generated.

The computer may be a general-purpose computer, a dedicated computer, a computer network, or another programmable apparatus. The computer instructions may be stored in a computer-readable storage medium, or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium (for example, an SSD).

Clearly, a person skilled in the art may make various modifications and variations to this application without departing from the scope of this application. This application is intended to cover these modifications and variations that are of this application provided that they fall within the scope of protection defined by the following claims and their equivalent technologies.

## Claims

1. A test case generation method, wherein the method comprises:
obtaining a test specification document of a user, wherein the test specification document comprises a test scheme described based on a natural language;
recommending a test interface set to the user based on a test step described in the test scheme, wherein the test interface set comprises a plurality of test interfaces for implementing a same test step; and
generating one or more test cases based on a selection operation performed by the user on the test interfaces in the test interface set.

2. The method according to claim 1, wherein the test interface comprises one of the following:
a test interface function; or
a test interface function and a parameter value of the test interface.

3. The method according to claim 1, wherein the recommending a test interface set to the user based on a step description in the test scheme comprises:
obtaining a plurality of test interfaces corresponding to the test step based on the test step described in the test specification document, wherein the test interface set comprises the plurality of test interfaces.

4. The method according to claim 3, wherein the obtaining a plurality of test interfaces corresponding to the test step comprises:
obtaining, based on a test interface selected by the user for a previous test substep of the test step, one or more test interfaces corresponding to a next test substep of the test step.

5. The method according to any one of claims 1 to 4, wherein the obtaining a test specification document of a user comprises:
receiving the test specification document input by the user;
marking a statement that does not comply with a syntax rule and that is in the test specification document;
displaying, to the user, a correction suggestion for the statement that does not comply with the syntax rule; and
updating the test specification document based on selection performed by the user on the correction suggestion.

6. The method according to claim 5, wherein the statement that does not comply with the syntax rule comprises a part or all of the following:
a statement with a spelling error, a statement with an incorrect syntax format, and a statement that violates a statement writing rule.

7. The method according to any one of claims 1 to 6, wherein the generating one or more test cases comprises:
generating one of the test cases for each test path in the test scheme.

8. A test case generation apparatus, wherein the apparatus comprises:
an obtaining module, configured to obtain a test specification document of a user, wherein the test specification document comprises a test scheme described based on a natural language;
a recommendation module, configured to recommend a test interface function set to the user based on a test step described in the test scheme, wherein the test interface set comprises a plurality of test interfaces for implementing a same test step; and
a generation module, configured to generate one or more test cases based on a selection operation performed by the user on the test interfaces in the test interface set.

9. The apparatus according to claim 8, wherein the test interface comprises one of the following:
a test interface function; or
a test interface function and a parameter value of the test interface.

10. The apparatus according to claim 8, wherein when recommending the test interface set to the user based on the step description in the test scheme, the recommendation module is configured to:
obtain a plurality of test interfaces corresponding to the test step based on the test step described in the test specification document, wherein the test interface set comprises the plurality of test interfaces.

11. The apparatus according to claim 10, wherein when obtaining the plurality of test interfaces corresponding to the test step, the recommendation module is configured to:
obtain, based on a test interface selected by the user for a previous test substep of the test step, one or more test interfaces corresponding to a next test substep of the test step.

12. The apparatus according to any one of claims 8 to 11, wherein when obtaining the test specification document of the user, the obtaining module is configured to:
receive the test specification document input by the user;
mark a statement that does not comply with a syntax rule and that is in the test specification document;
display, to the user, a correction suggestion for the statement that does not comply with the syntax rule; and
update the test specification document based on selection performed by the user on the correction suggestion.

13. The apparatus according to claim 12, wherein the statement that does not comply with the syntax rule comprises a part or all of the following:
a statement with a spelling error, a statement with an incorrect syntax format, and a statement that violates a statement writing rule.

14. The apparatus according to any one of claims 8 to 13, wherein when generating the one or more test cases, the generation module is configured to:
generate one of the test cases for each test path in the test scheme.

15. A computing device, wherein the computing device comprises a processor and a memory, wherein
the memory is configured to store computer program instructions; and
the processor executes and invokes the computer program instructions in the memory to perform the method according to any one of claims 1 to 7.

16. A non-transient computer-readable storage medium, wherein when the non-transient computer-readable storage medium is executed by a computing device, the computing device performs the method according to any one of claims 1 to 7.

17. A computing device program product, wherein the computing device program product comprises computer instructions; and when the computer instructions are executed by a computing device, the computing device performs the method according to any one of claims 1 to 7.
